Europäisches Patentamt

European Patent Office

Office européen des brevets

(19)

(11) Publication number: **0 488 949 B1**

## EUROPEAN PATENT SPECIFICATION

(12)

(45) Date of publication of patent specification: **26.07.95**

(51) Int. Cl.6: **C09J 163/00**, C08G 59/50, C08G 59/60

(21) Application number: **91810902.6**

(22) Date of filing: **20.11.91**

(54) **High performance epoxy adhesive.**

(30) Priority: **29.11.90 US 620244**

(43) Date of publication of application:
**03.06.92 Bulletin 92/23**

(45) Publication of the grant of the patent:
**26.07.95 Bulletin 95/30**

(84) Designated Contracting States:
**BE DE FR GB IT**

(56) References cited:
**EP-A- 0 240 460**
**US-A- 4 652 492**

(73) Proprietor: **CIBA-GEIGY AG**
**Klybeckstrasse 141**
**CH-4002 Basel (CH)**

(72) Inventor: **Behm, Dean Tallack**
**2682 Gemini Drive**
**Lake Orion, MI 48360 (US)**
Inventor: **LaBelle, Thomas Loren Arthur**
**226 Baldwin**
**Royal Oak, MI 48067 (US)**
Inventor: **Wongkamolsesh, Kachorn**
**30 Foxboro Drive**
**Rochester Hills, MI 48309 (US)**

## Description

The present invention relates to a two component epoxy adhesive system comprising an epoxy resin component and a hardener component.

The use of epoxide resins in adhesives has been commercial practice for several decades. Many hardeners for epoxy resins are reactive at room temperature and so need to be mixed with the epoxide just prior to use. Others are stable in admixture with the epoxide resin at room temperature, and harden only when heated to elevated temperatures. These hardeners, the so-called "latent hardeners" or "latent curing agents" are available commercially and include dicyandiamide and polycarboxylic acid hydrazides.

Compositions containing an epoxide resin and such a latent hardener generally take about 15 minutes to 1 hour to cure at temperatures of about 180°C. Cure times can be shortened by incorporation of accelerators. An accelerator which is often used when compositions having good impact resistance and heat resistance are required, for example in certain adhesive pastes for the automotive industry, is benzimidazole. However, compositions containing benzimidazole as the accelerator have undesirably limited storage stabilities at ambient temperature.

Accordingly, it is a primary object of the present invention to provide an epoxy adhesive system which exhibit good impact resistance, good heat resistance and prolonged storage stability at ambient temperature and can cure rapidly at both ambient and elevated temperatures.

A further object of the present invention is to provide a flexible, yet thermally resistant adhesive with high peel strength and ability to bond to a variety of substrates.

Various other objects and advantages of the present invention will become apparent from the following description thereof.

The present invention provides a two component epoxy adhesive system comprising

(A) an epoxy component comprising:

(1) from 5 to 60 wt%, based upon the total weight of the epoxy component, of at least one aromatic multifunctional epoxy resin containing on average at least two 1,2-epoxy groups per molecule; and

(B) a hardener component comprising:

(1) from 5 to 55 wt%, based upon the total weight of the hardener component, of a polyamide of a dimer fatty acid,

(2) from 5 to 90 wt%, based upon the total weight of the hardener component, of at least one aliphatic or cycloaliphatic amine and

(3) from 5 to 70 wt%, based upon the total weight of the hardener component, of at least one aromatic amine;

wherein from 5 to 50 wt%, based upon the total weight of the epoxy component, of a polyglycidyl ether of sorbitol, having more than 2 oxirane groups per molecule, as an accelerator is present in the epoxy component, from 0.5 to 7 wt%, based upon the total weight of the hardener component, of a tertiary amine accelerator is present in the hardener component or both a polyglycidyl ether of sorbitol is present in the epoxy component and a tertiary amine accelerator is present in the hardener component, and wherein the mix ratio of the epoxy resin component to the hardener component is 1 to 0.15 by weight.

### The Epoxy Resin Component

Suitable aromatic multifunctional epoxy resins for use in the epoxy resin component are virtually all aromatic epoxy resins containing on average at least two 1,2-epoxy groups per molecule.

Illustrative examples of such aromatic multifunctional epoxy resins are:

Polyglycidyl and poly($\beta$-methylglycidyl) ethers which may be obtained by reacting a compound containing at least two phenolic hydroxyl groups in the molecule with epichlorohydrin, glycerol dichlorohydrin or with $\beta$-methyl epichlorohydrin under alkaline conditions or in the presence of an acid catalyst, and subsequent treatment with an alkali. Illustrative of compounds containing at least two phenolic hydroxyl groups in the molecule are alcohols containing aromatic groups such as N,N-bis(2-hydroxyethyl)aniline or p,p'-bis(2-hydroxyethylamino)diphenylmethane; or mono- or polynuclear polyphenols such as resorcinol, hydroquinone, bis(4-hydroxyphenyl)methane, 2,2-bis(4-hydroxyphenyl)propane, brominated 2,2-bis(4-hydroxyphenyl)propane, bis(4-hydroxyphenyl) ether, bis(4-hydroxyphenyl)sulfone, 1,1,2,2-tetrakis(4-hydroxyphenyl) ethane or novolaks which are obtainable by condensation of aldehydes such as formaldehyde, acetaldehyde, chloral or furfuraldehyde with phenols or alkyl- or halogen-substituted phenols such as phenol, the above described bisphenols, 2- or 4-methylphenol, 4-tert-butylphenol, p-nonylphenol or 4-chlorophenol.

2

Poly(N-glycidyl) compounds which may be obtained by dehydrochlorinating the reaction products of epichlorohydrin with amines which contain at least two amino hydrogen atoms. Amines from which these epoxy resins are derived are, typically, aromatic amines such as aniline, p-toluidine, bis(4-aminophenyl) methane, bis(4-aminophenyl) ether, bis(4-aminophenyl)sulfone, 4,4'-diaminobiphenyl or 3,3'-diaminobiphenyl; or araliphatic amines such as m-xylylenediamine.

Poly(S-glycidyl) derivatives, for example bis(S-glycidyl) derivatives which are derived from bis(4-mercaptomethylphenyl) ether.

It is also possible, however, to use epoxy resins in which the 1,2-epoxy groups are attached to different hetero atoms or functional groups. These compounds, comprise, for example, the N,N,O-triglycidyl derivative of 4-aminophenol, the N,N,O-triglycidyl derivative of 3-aminophenol or the glycidyl ether/glycidyl ester of salicylic acid.

Preferred aromatic multifunctional epoxy resins include N,N,O-triglycidyl-4-aminophenol, N,N,N',N'-tetraglycidyl derivative of methylene dianiline, epoxidized novolaks, epoxidized bisphenol A resins, epoxidized resorcinol and epoxidized bisphenol F. Most preferably, N,N,O-triglycidyl-4-aminophenol is used.

The aromatic multifunctional epoxy resin is present in a range of preferably 7 to 30 wt%, most preferably 10 to 20 wt% based upon the total weight of the epoxy component.

Additionally, the epoxy resin component may further contain an aliphatic multifunctional epoxy resin. Suitable aliphatic multifunctional epoxy resins for use in the epoxy resin component are virtually all aliphatic epoxy resins containing on average at least two 1,2-epoxy groups per molecule.

Illustrative examples of such aliphatic multifunctional epoxy resins are:

Polyglycidyl and poly($\beta$-methylglycidyl) esters which may be obtained by reacting a compound containing at least two carboxyl groups in the molecule with epichlorohydrin, glycerol dichlorohydrin or with $\beta$-methylepichlorohydrin in the presence of a base. Illustrative of compounds containing at least two carboxyl groups in the molecule are saturated aliphatic dicarboxylic acids such as adipic acid or sebacic acid; or unsaturated aliphatic dicarboxylic acids such as maleic acid; or aromatic dicarboxylic acids such as phthalic acid, isophthalic acid or terephthalic acid; or copolymers of (meth)acrylic acid with copolymerisable vinyl monomers such as the 1:1 copolymers of methacrylic acid with styrene or with methylmethacrylate.

Polyglycidyl and Poly($\beta$-methylglycidyl) ethers which may be obtained by reacting a compound containing at least two alcoholic hydroxyl groups in the molecule with epichlorohydrin, glycerol dichlorohydrin or with $\beta$-methyl epichlorohydrin under alkaline conditions or in the presence of an acid catalyst, and subsequent treatment with an alkali. Illustrative of compounds containing at least two alcoholic hydroxyl groups in the molecule are aliphatic alcohols such as ethylene glycol, diethylene glycol and higher poly-(oxyethylene) glycols, 1,2-propanediol, 1,3-propanediol or poly(oxypropylene) glycols, 1,4-butanediol or poly(oxybutylene)glycols, 1,5-pentanediol, neopentyl glycol (2,2-dimethylpropanediol), 1,6-hexanediol, 1,8-octanediol, 1,10-decanediol or 1,12-dodecanediol; 2,4,6-hexanemol, glycerol, 1,1,1-trimethylolethane, 1,1,1-trimethylolpropane, pentaerythritol, sorbitol or polyepichlorohydrins; or cycloaliphatic alcohols such as 1,3-or 1,4-hydroxy-cyclohexane, 1,4-cyclohexanedimethanol, bis(4-hydroxycyclohexyl)methane, 2,2-bis-(4-hydroxycyclohexyl)propane or 1,1-bis(hydroxymethyl)cyclohex-3-ene;

Poly(N-glycidyl) compounds which may be obtained by dehydrochlorinating the reaction products of epichlorohydrin with amines which contain at least two amino hydrogen atoms. Amines from which these epoxy resins are derived are, typically, aliphatic amines such as hexamethylenediamine or n-butylamine.

Included among the poly(N-glycidyl) compounds are also triglycidyl isocyanurate, N,N'-diglycidyl derivatives of cycloalkyleneureas, for example of ethyleneurea or of 1,3-propyleneurea, and N,N'-diglycidyl derivatives of hydantoins, for example of 5,5-dimethylhydantoin.

Poly(S-glycidyl) derivatives, for example bis(S-glycidyl) derivatives which are derived from dithiols such as 1,2-ethanedithiol.

Cycloaliphatic epoxy resins or epoxidation products of dienes or polyenes, such as cycloaliphatic epoxy resins which may be prepared by epoxidation of ethylenically unsaturated cycloaliphatic compounds. Illustrative of such compounds are 1,2-bis(2,3-epoxycyclopentyloxy)ethane, 2,3-epoxycyclopentyl glycidyl ether, diglycidyl esters of cyclohexane-1,2-dicarboxylic acid, 3,4-epoxycyclohexyl glycidyl ether, bis(2,3-epoxycyclopentyl)ether, bis(3,4-epoxycyclohexyl)ether, 5(6)-glydiyl-2-(1,2-epoxyethyl)bicyclo[2.2.1]heptane, dicyclopentadiene dioxide, cyclohexa-1,3-diene dioxide, 3,4-epoxy-6-methylcyclohexylmethyl-3',4'-epoxy-6'-methylcyclohexanecarboxylate or 3,4-epoxycyclohexylmethyl-3',4'-epoxycyclohexanecarboxylate.

It is also possible, however, to use epoxy resins in which the 1,2-epoxy groups are attached to different hetero atoms or functional groups. These compounds comprise, for example, N-glycidyl-N'-(2-glycidyloxypropyl)-5,5-dimethylhydantoin or 2-glycidyloxy-1,3-bis-(5,5-dimethyl-1-glycidylhydantoin-3-yl)propane.

Preferred aliphatic multifunctional epoxy resins include diglycidylesters of cyclohexane-1,2-dicarboxylic acid, trimethylol ethane triglycidyl ether and trimethylol propane triglycidyl ether. Most preferably trimethylol propane triglycidyl ether is used.

The aliphatic multifunctional epoxy resin may be present in a range of from 10 to 75 wt%, preferably 10 to 50 wt%, most preferably 12 to 20 wt% based upon the total weight of the epoxy component.

The preparation of the polyglycidyl ether of sorbitol, having more than 2 oxirane groups per molecule, is described in U.S. Patent No. 4,914,164, which is hereby incorporated by reference. If the polyglycidyl ether of sorbitol, having more than 2 oxirane groups per molecule, is used it is present in a range of preferably 10 to 30 wt%, most preferably 12 to 20 wt% based upon the total weight of the epoxy component.

The epoxy resin component may also contain other conventional modifiers such as extenders, fillers and reinforcing agents, pigments, dyestuffs, organic solvents, plasticizers, tackifiers, rubbers, diluents, adhesion promoters, such as epoxy silane, and the like. As extenders, reinforcing agents, fillers and pigments which can be employed in the epoxy resin component according to the invention there may be mentioned, for example: glass fibers, glass balloons, boron fibers, carbon fibers, cellulose, polyethylene powder, polypropylene powder, mica, quartz powder, gypsum, antimony trioxide, bentones, talc, silica aerogel ("Aerosil"), fumed silica, wollastonite, silane treated wollastonite, lithopone, barite, calcium carbonate, titanium dioxide, carbon black, graphite, iron oxide, or metal powders such as aluminum powder or iron powder. The preferred fillers are fumed silica, wollastonite and silane treated wollastonite. It is also possible to add other usual additives, for example, agents for conferring thixotropy, flow control agents such as silicones, cellulose acetate butyrate, polyvinyl butyral, stearates and the like.

Preferably, the epoxy resin component includes one or more fillers selected from the group consisting of aluminum powder, Wollastonite, silane treated Wollastonite and fumed silica in an amount ranging from 1 to 50 wt%, preferably 1.5 to 40 wt%, most preferably 2.00 to 38 wt% based upon the total weight of the epoxy component. More preferably, the epoxy component further comprises an epoxy silane as an adhesion promoter which provides the cured adhesive with resistance to moisture and is present in an amount of from 0.25 to 6.0 wt%, preferably 0.4 to 1.5 wt%, most preferably 0.5 to 1.0 wt% based upon the total weight of the epoxy component.

## The Hardener Component

Suitable polyamides of a dimer fatty acid include a hydrogenated polyaminoamide (VERSAMID® 140, Henkel), a conventional polyamide (UNI-REZ® 2188, Union Camp), VERSAMID® 125 (Henkel), VERSAMID® 115 (Henkel) and HY 840® (CIBA-GEIGY). Preferably, VERSAMID® 140 (Henkel) is used. Polyamidoamines are prepared by dimerizing tall oil fatty acids and then reacting the dimerized acid with aliphatic amines such as diethylenetriamine. These hardeners are described by V. Brytus, Modern Paint and Coatings, Vol. 74, No. 10, p. 172 (1984).

The polyamide of a dimer fatty acid is present preferably in a range of 7 to 43 wt%, most preferably 20 to 35 wt% based upon the total weight of the hardener component.

Suitable aliphatic or cycloaliphatic amines for use in the hardener component include monoethanolamine, N-aminoethyl ethanol amine, ethylenediamine, hexamethylenediamine, trimethylhexamethylenediamine, diethylenetriamine, triethylenetetramine, tetraethylenepentamine, N,N-dimethylpropylenediamine-1,3, N,N-diethylpropylenediamine-1,3, bis(4-amino-3-methylcyclohexyl)methane, bis(p-aminocyclohexyl)methane, 2,2-bis(4-aminocyclohexyl)propane, N-aminoethyl-piperazine, 1,3-diaminocyclohexane, 1,4-diaminocyclohexane, 1,3-bis(aminomethyl)cyclohexane, isophorone diamine and 3,5,5-trimethyl-s-(aminomethyl)-cyclohexylamine.

Preferred aliphatic or cycloaliphatic amines include bis(p-aminocyclohexyl)methane, N,N-dimethylpropylene diamine-1,3, isophorone diamine and diethylenetriamine. Most preferably, N,N-dimethylpropylene diamine-1,3 or bis(p-aminocyclohexyl)methane is used.

The aliphatic or cycloaliphatic amine is present in a range of preferably 6.0 to 20 wt%, most preferably 7 to 15 wt% based upon the total weight of the hardener component.

Suitable aromatic amines include m-phenylene-diamine, p-phenylenediamine, bis(p-aminophenyl)methane, bis(p-aminophenyl)sulfone, m-xylylenediamine, toluene diamine, 4,4'-methylene-dianiline, a diaminodiphenylether, benzidine, 4,4-thiodianiline, 4-methoxy-6-m-phenyldiamine, 2,6-diaminopyridine, dianisidine and 1-methyl-imidazole.

Preferred aromatic amines include M-xylylenediamine, 4,4'-methylene dianiline and bis(p-aminophenyl)sulfone. Most preferably, methylene dianiline or m-xylylenediamine is used.

The aromatic amine is present in a range of preferably 5 to 50 wt%, most preferably 7 to 20 wt% based upon the total weight of the hardener component.

Suitable tertiary amine accelerators include triethylamine, tris(dimethylaminoethyl)phenol, boron trifluoride-amine complex, benzyl dimethylamine and 2-(dimethylaminomethyl)phenol. Preferably, tris-

EP 0 488 949 B1

(dimethylaminoethyl)phenol is used.

If the tertiary amine accelerator is used it is present in a range of preferably 1 to 5 wt%, most preferably 1.5 to 3.5 wt% based upon the total weight of the hardener component.

The hardener component may also contain other conventional modifiers such as extenders, fillers and reinforcing agents, pigments, dyestuffs, organic solvents, plasticizers, tackifiers, rubbers, diluents, adhesion promoters, such as epoxy silane, toughening agents, such as an amino terminated acrylonitrile/butadiene copolymer, coupling agents, such as amino silane and the like. As extenders, reinforcing agents, fillers and pigments which can be employed in the epoxy resin component according to the invention there may be mentioned, for example: glass fibers, glass balloons, boron fibers, carbon fibers, cellulose, polyethylene powder, polypropylene powder, mica, quartz powder, gypsum, antimony trioxide, bentones, talc, silica aerogel ("Aerosil"), fumed silica, wollastonite, silane treated wollastonite, lithopone, barite, calcium carbonate, titanium dioxide, carbon black, graphite, iron oxide, or metal powders such as aluminum powder or iron powder. The preferred fillers are fumed silica, wollastonite and aluminum powder. It is also possible to add other usual additives, for example, agents for conferring thixotropy, flow control agents such as silicones, cellulose acetate butyrate, polyvinyl butyral, stearates and the like.

Additionally, a surfactant can be used such as a fluoropolymer surfactant, titanates and zirconates. Preferably, the hardener component contains a fluoropolymer surfactant in an amount ranging from 0.10 to 3.0 wt%, preferably 0.25 to 1.0 wt%, most preferably 0.25 to 0.50 wt% based upon the total weight of the hardener component.

Preferably, the hardener component includes one or more fillers selected from the group consisting of aluminum powder, Wollastonite and fumed silica in an amount ranging from 0.5 to 40 wt%, preferably 1 to 30 wt%, most preferably 1.5 to 15.0 wt% based upon the total weight of the epoxy component.

The mix ratio of the epoxy resin component to the hardener component is preferably 1 to 0.5 by weight, most preferably 1 to 0.7 by weight.

A vertical type high-speed agitator, kneading machine, roll machine, ball mill or any other suitable mixing and agitating machine may be used for dispersion of the components of the composition of the present invention.

The invention also provides a method of bonding or sealing two surfaces together which comprises applying a composition of the invention to one or both surfaces, placing the two surfaces together with the composition positioned therebetween and, permitting the adhesive to cure at from about room temperature to about 121°C. Preferably, a room temperature cure is employed. This method may be used with surfaces of metal, such as steel or aluminum, plastic materials, glass, friction materials, such as brake linings, and ceramic materials.

The following examples serve to give specific illustrations of the practice of this invention but they are not intended in any way to limit the scope of this invention.

EXAMPLE 1

This example illustrates the preparation, physical properties, mechanical properties and durability testing of a typical composition of the present invention. The ingredients are listed in Table 1 and the physical and mechanical properties are listed in Tables 2 to 4, respectively.

5

## Table 1

### Epoxy Resin Component

| Ingredient | Content (wt. %) |
|---|---|
| Bisphenol A Epoxy Resin (XU GY 6010 from CIBA-GEIGY Corp.) | 47.50 |
| Epoxy resin of Sorbitol (XU GY 358 from CIBA-GEIGY Corp.) | 12.50 |
| Epoxy resin of p-aminophenol (MY 0510 from CIBA-GEIGY Corp.) | 15.00 |
| Epoxy silane (Silane A-187 from UNION CARBIDE) | 0.50 |
| Aluminum powder | 10.00 |
| Wollastonite (Wollastonite P-4 from NYCO) | 12.50 |
| Fumed Silica (CABOSIL® TS 720 from Cabot Corp.) | 2.00 |

## Hardener Component

| Ingredient | Content (wt. %) |
|---|---|
| Polyamide of $C_{18}$ fatty acids (VERSAMID® 140 CE from Henkel) | 22.92 |
| Amine adduct of MY 0500 (CIBA-GEIGY) (HY 355 from CIBA-GEIGY Corp.) | 12.73 |
| 3-Dimethylaminopropylamine | 7.15 |
| Amino terminated acrylonitrile/butadiene copolymer (ATBN 1300x16 from BF GOODRICH) | 49.95 |
| Tris(dimethylamino)phenol (DY 064 from CIBA-GEIGY Corp.) | 3.00 |
| Amino silane (Silane A-1102 from UNION CARBIDE) | 1.50 |
| Fluoropolymer surfactant (FLUORAD® FC-430 from 3M Corp.) | 0.25 |
| Fumed Silica (CABOSIL® M-5 from CABOT Corp.) | 2.50 |

Table 2

| Physical Properties | |
|---|---|
| Mix Ratio | 100:100 (pbv) 100:70 (pbw) |
| Viscosity (Brookfield RVF, 75°F; 1 mPa•s = 1 cps) | |
| Resin, Spindle #6 at RPM | 91,250 mPa•s (cps) |
| Hardener, Spindle #6 at 4 RPM | 102,000 mPa•s |
| Mixed, Spindle #6 at 4 RPM | 53,750 mPa•s |
| Gel Time (dry wire method) | 55 minutes |
| Tensile Stength (ASTM D638) | 31.95 MPa (= 4634 psi) |
| Elongation at Break (ASTM D638) | 11.0% |
| Tensile Modulus (ASTM D638) | 1462 MPa (= 212,000 psi) |
| Glass Transition Temperature (Rheometrics) | 77°C and 110°C |
| Cure | 7 Days/25°C (77°F) |
| Mix ratio of epoxy resin component and hardener component is 1:1 by volume. | |

Either bare or clad (0.160 cm) aluminum 2024-T3 alloy (available from Copper and Brass Sales) was used as the substrate for mechanical tests, other than T-peels. All aluminum was etched as per ASTM D2651, method A (chromic acid). All samples were cured at 25°C for 7 days prior to testing, and lap shear specimens were tested according to ASTM D1002. Bondline thickness was maintained at 0.010-0.013 cm. In the exposure tests, Federal Specification MMM-A-132A procedures were followed. Testing temperatures for lap shears were also done in accordance with the above specification.

## Table 3

### Mechanical Properties

| Aluminum Bonding Temperature | Lap Shear Strength Bare | Clad |
|---|---|---|
| -55°C (-67°F) | 24.27 MPa (3520 psi) | 22.96 MPa (3330 psi) |
| 25°C (77°F) | 29.72 MPa (4310 psi) | 29.92 MPa (4340 psi) |
| 82.2°C (180°F) | 17.72 MPa (2570 psi) | 17.79 MPa (2580 psi) |

ASTM D1002; Aluminum etched per ASTM D2651, Method A.

T-Peel (25°C (77°F); ASTM D1876,0.010" bondline)    15,78 kg/m (7pli)

| Thermoplastic Bonding Substrate | Lap Shear Strength |
|---|---|
| Ultem 1000 (Polyetherimide from GENERAL ELECTRIC) | 9.45 MPa (SF) (1370 psi) |
| Ryton R-5 (Polyphenylene sulfide from PHILLIPS PETROLEUM) | 3.6 MPa (SF) (522 psi) |

Cured 87.8°C (190°F)/1.5 hr. Ultem-Dry wipe only before applying adhesive. Ryaton R-5-Chromic acid etched before applying adhesive. 0.020" bondline, 1.0" overlap.  SF= Substrate Failure.

## Table 4

| Durability Testing | |
|---|---|
| Fatigue (ASTM D3166) 5.17 MPa (750 psi) at $1 \times 10^6$ cycles, 3600 cpm | Pass |
| Fluid Immersion | Lap Shear Strength |
| JP-4 (7 Days/24°C (75°F)) | 34.1 MPa (4946 psi) |
| Humidity Exposure | |
| 30 Days 48.9°C (120°F) at 97% RH | 18,1 MPa (2630 psi) |
| Thermal Aging | |
| 7 Days/82.2°C (180°F) 7 Days/121°C (250°F) | 32.8 MPa (4750 psi) 28.4 MPa (4110 psi) |
| Bare 2024-T3 aluminum alloy, etched as per ASTM D2651, Method A. Testing at 24°C (75°F). | |

EXAMPLE 2

This example further illustrates the preparation and mechanical properties of a typical composition of the present invention. The ingredients are listed in Table 5 and the physical properties are listed in Tables 6.

## Table 5

### Epoxy Resin Component

| Ingredient | Content (wt. %) |
|---|---|
| Bisphenol A Epoxy Resin (GY 6010 from CIBA-GEIGY Corp.) | 47.50 |
| Epoxy Resin of Sorbitol (GY 358 from CIBA-GEIGY Corp.) | 12.50 |
| Epoxy Resin of p-aminophenol (MY 0510 from CIBA-GEIGY Corp.) | 15.00 |
| Epoxy silane (Silane A-187 from UNION CARBIDE) | 0.50 |
| Aluminum powder | 10.00 |
| Wollastonite P-4 (from NYCO) | 12.50 |
| Fumed silica (CABOSIL® TS 720 from Cabot Corp.) | 2.00 |

## Hardener Component

| Ingredient | Content (wt. %) |
|---|---|
| Polyamide of $C_{18}$ Fatty Acids (VERSAMID 140 from Henkel) | 30.92 |
| Amine adduct of MY 0500 (HY 355 from CIBA-GEIGY Corp.) | 14.73 |
| Dimethylaminopropaneamine | 7.15 |
| Amino terminated acrylonitrile/butadiene copolymer (ATBN 1300x16 from B.F. GOODRICH) | 39.95 |
| Tris(dimethylamino)phenol (DY 064 from CIBA-GEIGY Corp.) | 3.00 |
| Amino silane (Silane A-1102 from UNION CARBIDE) | 1.50 |
| Fluoropolymer surfactant (Fluorad FC-430 from 3M Corp.) | 0.25 |
| Fumed silica (CABOSIL®M5 from Cabot Corp.) | 2.50 |

The mix ratio of the epoxy resin component to the hardener component is 1/1 by volume.

### Table 6

#### Lap Shear Strength

| -55°C (-67°F) | 24°C (75°F) | 82.2°C (180°F) | 30 DAYS/48.9°C (120°F)/97%RH |
|---|---|---|---|
| 24.1 MPa (3490 psi) | 32.2 MPa (4674 psi) | 15.0 MPa (2182 psi) | 20.3 MPa (2940 psi) |

ASTM D1002, 7 day/25°C (77°F) cure

#### T-Peel
27,06 kg/m (12 pli)

ASTM D1876, 7 day/25°C (77°F) cure

EXAMPLE 3

This example further illustrates the preparation and mechanical properties of a typical composition of the present invention. The ingredients are listed in Table 7 and the physical properties are listed in Tables

8.

### Table 7

#### Epoxy Resin Component

| Ingredient | Content (wt. %) |
|---|---|
| Epoxy resin of MDA (methylene dianiline) (MY 721 from CIBA-GEIGY Corp.) | 19.47 |
| Epoxy novolac resin (EPN 1138 from CIBA-GEIGY Corp.) | 11.72 |
| Trimethylolpropane triglycidyl ether (Heloxy 5048 from HI-TEK POLYMERS) | 7.85 |
| Epoxy silane (A-187 from UNION CARBIDE) | 0.51 |
| Aluminum powder | 37.41 |
| Silane treated Wollastonite (400 Wollastokup 10222 from NYCO) | 21.00 |
| Fumed silica (CABOSIL® M5 from Cabot Corp.) | 2.04 |

#### Hardener Component

| Ingredient | Component (wt. %) |
|---|---|
| p-aminodicyclohexylmethane | 80.00 |
| Amine adduct of MY 0500 (HY 355 from CIBA-GEIGY Corp.) | 10.00 |
| Dimethylaminopropaneamine | 5.25 |
| Tris(dimethylamino)phenol (DY 064 from CIBA-GEIGY Corp.) | 3.00 |
| Amino silane (silane A-1102 from UNION CARBIDE) | 1.50 |
| Fluoropolymer surfactant (FLUORAD® FC-430 from 3M Corp.) | 0.25 |

The mix ratio of the epoxy resin component to the hardener component is 100/16 by weight.

Table 8

| Lap Shear Strength | | | | |
|---|---|---|---|---|
| -55 ° C (-67 ° F) | 24 ° C (75 ° F) | 82.2 ° C (180 ° F) | 148.9 ° C (300 ° F) | 204.4 ° C (400 ° F) |
| 13.6 MPa (1974 psi) | 19.2 MPa (2788 psi) | 16.7 MPa (2346 psi) | 8.7 MPa (1267 psi) | 3.5 MPa (508 psi) |
| ASTM D1002, 7 day/25 ° C (77 ° F) cure | | | | |

EXAMPLE 4

This example further illustrates the preparation and mechanical properties of a typical composition of the present invention. The ingredients are listed in Table 9 and the physical properties are listed in Tables 10.

## Table 9

### Epoxy Resin Component

| Ingredient | Content (wt. %) |
|---|---|
| Epoxy resin of MDA (methylene dianiline) (MY 721 from CIBA-GEIGY Corp.) | 19.47 |
| Epoxy novolac resin (EPN 1138 from CIBA-GEIGY Corp.) | 11.72 |
| Epoxy resin of p-aminophenol (MY 0510 from CIBA-GEIGY Corp.) | 7.85 |
| Epoxy silane (A-187 from UNION CARBIDE) | 0.51 |
| Aluminum powder | 37.41 |
| Silane treated Wollastonite (400 Wollastokup 10222 from NYCO) | 21.00 |
| Fumed silica (CABOSIL® M5 from Cabot Corp.) | 2.04 |

EP 0 488 949 B1

### Hardener Component

| Ingredient | Component (wt. %) |
|---|---|
| p-aminodicyclohexylmethane | 80.00 |
| Amine adduct of MY 0500 (HY 355 from CIBA-GEIGY Corp.) | 10.00 |
| Dimethylaminopropaneamine | 5.25 |
| Tris(dimethylamino)phenol (DY 064 from CIBA-GEIGY Corp.) | 3.00 |
| Amino silane (silane A-1102 from UNION CARBIDE) | 1.50 |
| Fluoropolymer surfactant (FLUORAD® FC-430 from 3M Corp.) | 0.25 |

The mix ratio of the epoxy resin component to the hardener component is 100/17 by weight.

Table 10

| Lap Shear Strength | | | | |
|---|---|---|---|---|
| -55 °C (-67 °F) | 24 °C (75 °F) | 82.2 °C (180 °F) | 148.9 °C (300 °F) | 204.4 °C (400 °F) |
| 13.6 MPa (1860 psi) | 19.2 MPa (3006 psi) | 16.7 MPa (2247 psi) | 12.0 MPa (1746 psi) | 3.1 MPa (455 psi) |
| ASTM D1002, 7 day/25 °C (77 °F) cure | | | | |

## Claims

1. A two component epoxy adhesive system comprising

   (A) an epoxy component comprising:
   
   (1) from 5 to 60 wt%, based upon the total weight of the epoxy component, of at least one aromatic multifunctional epoxy resin containing on average at least two 1,2-epoxy groups per molecule; and
   
   (B) a hardener component comprising:
   
   (1) from 5 to 55 wt%, based upon the total weight of the hardener component, of a polyamide of a dimer fatty acid,
   
   (2) from 5 to 90 wt%, based upon the total weight of the hardener component, of at least one aliphatic or cycloaliphatic amine and
   
   (3) from 5 to 70 wt%, based upon the total weight of the hardener component, of at least one aromatic amine;
   
   wherein from 5 to 50 wt%, based upon the total weight of the epoxy component, of a polyglycidyl ether of sorbitol, having more than 2 oxirane groups per molecule, as an accelerator is present in the epoxy component, from 0.5 to 7 wt%, based upon the total weight of the hardener component, of a tertiary amine accelerator is present in the hardener component or both a polyglycidyl ether of sorbitol is present in the epoxy component and a tertiary amine accelerator is present in the hardener component, and wherein the mix ratio of the epoxy resin component to the hardener component is 1 to 0.15 by weight.

13

2. A two component epoxy adhesive system according to claim 1 wherein said aromatic multifunctional epoxy resin is selected from the group consisting of N,N,N',N'-tetraglycidyl derivative of methylene dianiline, epoxidized novolaks, epoxidized Bisphenol A resins, epoxidized resorcinol epoxidized Bisphenol F and N,N,O-triglycidyl-4-aminophenol.

3. A two component epoxy adhesive system according to claim 1 wherein said aromatic multifunctional epoxy resin is N,N,O-triglycidyl-4-aminophenol.

4. A two component epoxy adhesive system according to claim 1 wherein said epoxy component further comprises an aliphatic multifunctional epoxy resin containing on average at least two 1,2-epoxy groups per molecule.

5. A two component epoxy adhesive system according to claim 4 wherein said aliphatic multifunctional epoxy resin is selected from the group consisting of diglycidylesters of cyclohexane-1,2-dicarboxylic acid, trimethylolethane triglycidyl ether and trimethylol propane triglycidyl ether.

6. A two component epoxy adhesive system according to claim 4 wherein said aliphatic multifunctional epoxy resin is trimethylol propane triglycidyl ether.

7. A two component epoxy adhesive system according to claim 1 wherein said polyamide of a dimer fatty acid is a hydrogenated polyaminoamide.

8. A two component epoxy adhesive system according to claim 1 wherein said aliphatic or cycloaliphatic amine is selected from the group consisting of monoethanolamine, N-aminoethyl ethanolamine, ethylenediamine, hexamethylenediamine, trimethylhexamethylenediamine, diethylenetriamine, triethylenetetramine, tetraethylenepentamine, N,N-dimethylpropylenediamine-1,3, N,N-diethylpropylenediamine-1,3, bis(4-amino-3-methylcyclohexyl)methane, bis(p-aminocyclohexyl)methane, 2,2-bis(4-aminocyclohexyl)propane, N-aminoethyl-piperazine, 1,2-diaminocyclohexane, 1,4-diaminocyclohexane, 1,3-bis(aminomethyl)cyclohexane, isophorone diamine, and 3,5,5-trimethyl-s-(aminomethyl)-cyclohexylamine.

9. A two component epoxy adhesive system according to claim 1 wherein said aliphatic or cycloaliphatic amine is selected from the group consisting of bis(p-aminocyclohexyl)methane, N,N-dimethylpropylene diamine-1,3, isophorone diamine and diethylenetriamine.

10. A two component epoxy adhesive system according to claim 1 wherein said aliphatic or cycloaliphatic amine is selected from the group consisting of N,N-dimethylpropylene diamine-1,3 and bis(p-aminocyclohexyl)methane.

11. A two component epoxy adhesive system according to claim 1 wherein said aromatic amine is selected from the group consisting of m-phenylene-diamine, p-phenylenediamine, bis(p-aminophenyl)methane, bis(p-aminophenyl)-sulfone, m-xylylenediamine, toluene diamine, 4,4'-methylene-dianiline, a diaminodiphenylether, benzidine, 4,4-thiodianiline, 4-methyoxy-6-m-phenyldiamine, 2,6-diaminopyridine, dianisidine and 1-methyl-imidazole.

12. A two component epoxy adhesive system according to claim 1 wherein said aromatic amine is selected from the group consisting of m-xylylenediamine, 4,4'-methylene-dianiline and bis(p-aminophenyl)-sulfone.

13. A two component epoxy adhesive system according to claim 1 wherein said aromatic amine is selected from the group consisting of m-xylylenediamine and 4,4'-methylene-dianiline.

14. A two component epoxy adhesive system according to claim 1 wherein said epoxy component further comprises one or more fillers.

15. A two component epoxy adhesive system according to claim 1 wherein said epoxy component further comprises an epoxy silane as a adhesion promoter.

**16.** A two component epoxy adhesive system according to claim 1 wherein said tertiary amine accelerator is selected from the group consisting of triethylamine, tris(dimethylaminoethyl)phenol, boron trifluoride-amine complex, benzyl dimethylamine, and 2-dimethylaminomethyl)phenol.

**17.** A two component epoxy adhesive system according to claim 1 wherein said tertiary amine accelerator is tris(dimethylaminoethyl)phenol.

**18.** A two component epoxy adhesive system according to claim 1 wherein said hardener component further comprises a surfactant and one or more fillers.

**19.** A method of bonding or sealing two surfaces together comprising application of a two component epoxy adhesive system according to claim 1 to one or both surfaces to be bonded; placing the surfaces together with said adhesive system positioned therebetween and permitting the adhesive to cure at from about room temperature to about 121 °C.

**Patentansprüche**

**1.** Zweikomponentenepoxidharzklebstoffsystem, umfassend
　　(A) eine Epoxidharzkomponente, umfassend:
　　　　(1) 5 bis 60 Gew.-%, bezogen auf das Gesamtgewicht der Epoxidharzkomponente, mindestens ein aromatisches multifunktionelles Epoxidharz, enthaltend im Durchschnitt mindestens zwei 1,2-Epoxygruppen pro Molekül und
　　(B) eine Härterkomponente, umfassend:
　　　　(1) 5 bis 55 Gew.-%, bezogen auf das Gesamtgewicht der Härterkomponente, ein Polyamid einer dimeren Fettsäure,
　　　　(2) 5 bis 90 Gew.-%, bezogen auf das Gesamtgewicht der Härterkomponente, mindestens ein aliphatisches oder cycloaliphatisches Amin und
　　　　(3) 5 bis 70 Gew.-%, bezogen auf das Gesamtgewicht der Härterkomponente, mindestens ein aromatisches Amin,
　　　wobei 5 bis 50 Gew.-%, bezogen auf das Gesamtgewicht der Epoxidharzkomponente, ein Polyglycidylether von Sorbit mit mehr als 2 Oxirangruppen pro Molekül als Beschleuniger in der Epoxidharzkomponente vorliegt, 0,5 bis 7 Gew.-%, bezogen auf das Gesamtgewicht der Härterkomponente, ein Tertiäramin-Beschleuniger in der Härterkomponente vorliegt, oder sowohl ein Polyglycidylether von Sorbit in der Epoxidharzkomponente vorliegt, als auch ein Tertiäramin-Beschleuniger in der Härterkomponente vorliegt, und wobei das Mischungsverhältnis der Epoxidharzkomponente zu der Härterkomponente 1 bis 0,15, auf das Gewicht bezogen, beträgt.

**2.** Zweikomponentenepoxidharzklebstoffsystem nach Anspruch 1, wobei das aromatische multifunktionelle Epoxidharz ausgewählt ist aus der Gruppe, bestehend aus N,N,N',N'-Tetraglycidylderivat von Methylendianilin, epoxidierten Novolaken, epoxidierten Bisphenol-A-Harzen, epoxidiertem Resorcin, epoxidiertem Bisphenol-F und N,N,O-Triglycidyl-4-aminophenol.

**3.** Zweikomponentenepoxidharzklebstoffsystem nach Anspruch 1, wobei das aromatische multifunktionelle Epoxidharz N,N,O-Triglycidyl-4-aminophenol ist.

**4.** Zweikomponentenepoxidharzklebstoffsystem nach Anspruch 1, wobei die Epoxidharzkomponente außerdem ein aliphatisches multifunktionelles Epoxidharz umfaßt, das im Durchschnitt mindestens zwei 1,2-Epoxygruppen pro Molekül enthält.

**5.** Zweikomponentenepoxidharzklebstoffsystem nach Anspruch 4, wobei das aliphatische multifunktionelle Epoxidharz, ausgewählt ist aus der Gruppe, bestehend aus Diglycidylestern von Cyclohexan-1,2-dicarbonsäure, Trimethylolethantriglycidylether und Trimethylolpropantriglycidylether.

**6.** Zweikomponentenepoxidharzklebstoffsystem nach Anspruch 4, wobei das aliphatische multifunktionelle Epoxidharzsystem ein Trimethylolpropantriglycidylether ist.

**7.** Zweikomponentenepoxidharzklebstoffsystem nach Anspruch 1, wobei das Polyamid einer dimeren Fettsäure ein hydriertes Polyaminoamid ist.

8. Zweikomponentenepoxidharzklebstoffsystem nach Anspruch 1, wobei das aliphatische oder cycloaliphatische Amin ausgewählt ist aus der Gruppe, bestehend aus Monoethanolamin, N-Aminoethylethanolamin, Ethylendiamin, Hexamethylendiamin, Trimethylhexamethylendiamin, Diethylentriamin, Triethylentetramin, Tetraethylenpentamin, N,N-Dimethylpropylendiamin-1,3, N,N-Diethylpropylendiamin-1,3, Bis(4-amino-3-methylcyclohexyl)methan, Bis(p-aminocyclohexyl)methan, 2,2-Bis(4-aminocyclohexyl)propan, N-Aminoethylpiperazin, 1,2-Diaminocyclohexan, 1,4-Diaminocyclohexan, 1,3-Bis(aminomethyl)-cyclohexan, Isophorondiamin und 3,5,5-Trimethyl-s-(aminomethyl)cyclohexylamin.

9. Zweikomponentenepoxidharzklebstoffsystem nach Anspruch 1, wobei das aliphatische oder cycloaliphatische Amin ausgewählt ist aus der Gruppe, bestehend aus Bis(p-aminocyclohexyl)methan, N,N-Dimethylpropylendiamin-1,3, Isophorondiamin und Diethylentriamin.

10. Zweikomponentenepoxidharzklebstoffsystem nach Anspruch 1, wobei das aliphatische oder cycloaliphatische Amin ausgewählt ist aus der Gruppe, bestehend aus N,N-Dimethylpropylendiamin-1,3 und Bis(p-aminocyclohexyl)methan.

11. Zweikomponentenepoxidharzklebstoffsystem nach Anspruch 1, wobei das aromatische Amin ausgewählt ist aus der Gruppe, bestehend aus m-Phenylendiamin, p-Phenylendiamin, Bis(p-aminophenyl)-methan, Bis(p-aminophenyl)sulfon, m-Xylylendiamin, Toluoldiamin, 4,4'-Methylendianilin, Diaminodiphenylether, Benzidin, 4,4-Thiodianilin, 4-Methoxy-6-m-phenyldiamin, 2,6-Diaminopyridin, Dianisidin und 1-Methylimidazol.

12. Zweikomponentenepoxidharzklebstoffsystem nach Anspruch 1, wobei das aromatische Amin ausgewählt ist aus der Gruppe, bestehend aus m-Xylylendiamin, 4,4'-Methylendianilin und Bis(p-aminophenyl)sulfon.

13. Zweikomponentenepoxidharzklebstoffsystem nach Anspruch 1, wobei das aromatische Amin ausgewählt ist aus der Gruppe, bestehend aus m-Xylylendiamin und 4,4'-Methylendianilin.

14. Zweikomponentenepoxidharzklebstoffsystem nach Anspruch 1, wobei die Epoxidharzkomponente außerdem einen oder mehrere Füllstoffe umfaßt.

15. Zweikomponentenepoxidharzklebstoffsystem nach Anspruch 1, wobei die Epoxidharzkomponente zusätzlich ein Epoxysilan als Adhäsionspromotor umfaßt.

16. Zweikomponentenepoxidharzklebstoffsystem nach Anspruch 1, wobei der Tertiäramin-Beschleuniger ausgewählt ist aus der Gruppe, bestehend aus Triethylamin, Tris(dimethylaminoethyl)phenol, Bortrifluorid-Aminkomplex, Benzyldimethylamin und 2-(Dimethylaminomethyl)phenol.

17. Zweikomponentenepoxidharzklebstoffsystem nach Anspruch 1, wobei der Tertiäramin-Beschleuniger Tris(dimethylaminoethyl)phenol ist.

18. Zweikomponentenepoxidharzklebstoffsystem nach Anspruch 1, wobei die Härterkomponente zusätzlich ein Tensid und einen oder mehrere Füllstoffe enthält.

19. Verfahren zum Verbinden oder gemeinsamen Versiegeln von zwei Oberflächen, umfassend Anwendung eines Zweikomponentenepoxidharzklebstoffsystems nach Anspruch 1, auf eine oder beide Oberflächen, die zu verbinden sind, Anordnen der Oberflächen zusammen mit dem dazwischen angeordneten Klebstoffsystem und Härtenlassen des Klebstoffes bei etwa Raumtemperatur bis etwa 121 °C.

**Revendications**

1. Système adhésif époxyde à deux composants, comprenant :
    A) un composant époxyde comprenant :
        (1) de 5 à 60 % en poids, par rapport au poids total du composant époxyde, d'au moins une résine époxyde multifonctionnelle aromatique contenant en moyenne au moins deux groupes 1,2-époxy par molécule ; et
    B) un composant durcisseur comprenant :

(1) de 5 à 55 % en poids, par rapport au poids total du composant durcisseur, d'un polyamide d'un acide gras dimère,

(2) de 5 à 90 % en poids, par rapport au poids total du composant durcisseur, d'au moins une amine aliphatique ou cyoloaliphatique, et

(3) de 5 à 70 % en poids, par rapport au poids total du composant durcisseur, d'au moins une amine aromatique ;

où on a dans le composant époxyde de 5 à 50 % en poids, par rapport au poids total du composant époxyde, d'un éther polyglycidylique du sorbitol ayant dans sa molécule plus de deux groupes oxiranne et servant d'accélérateur ; on a dans le composant durcisseur de 0,5 à 7 % en poids, par rapport au poids total du composant durcisseur, d'un accélérateur du type amine tertiaire ; ou encore on a simultanément un éther polyglycidylique du sorbitol dans le composant époxyde et un accélérateur du type amine tertiaire dans le composant durcisseur, et où le rapport de mélange du composant résine époxyde au composant durcisseur est de 1:0,15 en poids.

2. Système adhésif époxyde à deux composants selon la revendication 1, dans lequel la résine époxyde multifonctionnelle aromatique est choisie parmi l'ensemble comprenant le dérivé N,N,N',N'-tétraglycidylique de la méthylènedianiline, les novolaques époxydées, les résines de bisphénol A époxydées, le résorcinol époxydé, le bisphénol F époxydé et le N,N,O-triglycidyl-4-aminophénol.

3. Système adhésif époxyde à deux composants selon la revendication 1, dans lequel la résine époxyde multifonctionnelle aromatique est le N,N,O-triglycidyl-4-aminophénol.

4. Système adhésif époxyde à deux composants selon la revendication 1, dans lequel le composant époxyde contient en outre une résine époxyde multifonctionnelle aliphatique ayant en moyenne au moins deux groupes 1,2-époxy par molécule.

5. Système adhésif époxyde à deux composants selon la revendication 4, dans lequel la résine époxyde multifonctionnelle aliphatique est choisie parmi l'ensemble comprenant les esters diglycidyliques de l'acide cyclohexane 1,2-dicarboxylique, l'éther triglycidylique du triméthyloléthane et l'éther triglycidylique du triméthylolpropane.

6. Système adhésif époxyde à deux composants selon la revendication 4, dans lequel la résine époxyde multifonctionnelle aliphatique est l'éther triglycidylique du triméthylolpropane.

7. Système adhésif époxyde à deux composants selon la revendication 1, dans lequel ledit polyamide d'un acide gras dimère est un polyaminoamide hydrogéné.

8. Système adhésif époxyde à deux composants selon la revendication 1, dans lequel l'amine aliphatique ou cycloaliphatique est choisie parmi l'ensemble comprenant la monoéthanolamine, la N-aminoéthyléthanolamine, l'éthylènediamine, l'hexaméthylènediamine, la triméthylhexaméthylènediamine, la diéthylènetriamine, la triéthylènetétramine, la tétraéthylènepentamine, la N,N-diméthylpropylènediamine-1,3, la N,N-diéthylpropylènediamine-1,3, le bis(4-amino-3-méthylcyclohexyl)méthane, le bis(p-aminocyclohexyl)méthane, le 2,2-bis(4-aminocyclohexyl)propane, la N-aminoéthyl-pipérazine, le 1,3-diaminocyclohexane, le 1,4-diaminocyclohexane, le 1,3-bis(aminométhyl)cyclohexane, l'isophoronediamine et la 3,5,5-triméthyl-s-(aminométhyl)-cyclohexylamine.

9. Système adhésif époxyde à deux composants selon la revendication 1, dans lequel l'amine aliphatique ou cycloaliphatique est choisie parmi l'ensemble comprenant le bis(p-aminocyclohexyl)méthane, la N,N-diméthylpropylènediamine-1,3, l'isophorone, l'isophoronediamine et la diéthylènetriamine.

10. Système adhésif époxyde à deux composants selon la revendication 1, dans lequel l'amine aliphatique ou cycloaliphatique est choisie parmi l'ensemble comprenant la N,N-diméthylpropylènediamine-1,3 et le bis(p-aminocyclohexyl)méthane.

11. Système adhésif époxyde à deux composants selon la revendication 1, dans lequel l'amine aromatique est choisie parmi l'ensemble comprenant la m-phénylènediamine, la p-phénylènediamine, le bis(p-aminophényl)-méthane, la bis(p-aminophényl)-sulfone, la m-xylylènediamine, la toluènediamine, la 4,4'-méthylène-dianiline, un diaminodiphényléther, la benzidine, la 4,4-thiodianiline, la 4-méthoxy-6-m-phényldiamine, la 2,6-diaminopyridine, la dianisidine et le 1-méthyl-imidazole.

12. Système adhésif époxyde à deux composants selon la revendication 1, dans lequel l'amine aromatique est choisie parmi l'ensemble comprenant la m-xylylènediamine, la 4,4'-méthylènedianiline et la bis(p-aminophényl)sulfone.

13. Système adhésif époxyde à deux composants selon la revendication 1, dans lequel l'amine aromatique est choisie parmi l'ensemble comprenant la m-xylylènediamine et la 4,4'-méthylènedianiline.

14. Système adhésif époxyde à deux composants selon la revendication 1, dans lequel le composant époxyde contient en outre une ou plusieurs charges.

15. Système adhésif époxyde à deux composants selon la revendication 1, dans lequel le composant époxyde contient en outre un époxysilane comme promoteur d'adhérence.

16. Système adhésif époxyde à deux composants selon la revendication 1, dans lequel l'accélérateur du type amine tertiaire est choisi parmi l'ensemble comprenant la triéthylamine, le tris-(diméthylaminoéthyl)phénol, le complexe trifluorure de bore-amine, la benzyldiméthylamine et le 2-(diméthylaminométhyl)phénol.

17. Système adhésif époxyde à deux composants selon la revendication 1, dans lequel l'accélérateur du type amine tertiaire est le tris(diméthylaminoéthyl)phénol.

18. Système adhésif époxyde à deux composants selon la revendication 1, dans lequel le composant durcisseur contient en outre un tensioactif et une ou plusieurs charges.

19. Procédé pour coller ou lier deux surfaces l'une à l'autre, qui consiste à appliquer un système adhésif époxyde à deux composants selon la revendication 1 sur l'une des surfaces ou sur les deux surfaces à coller ; à placer les surfaces l'une contre l'autre, le système adhésif se trouvant entre elles, et à laisser l'adhésif durcir à une température comprise entre approximativement la température ambiante et environ 121°C.